# FASCICULE DE BREVET EUROPEEN

(11) **EP 3 758 245 B1**
(45) Date de publication et mention de la délivrance du brevet: **05.03.2025**
(21) Numéro de dépôt: 20181794.7
(22) Date de dépôt: 23.06.2020
(51) Int. Cl.: H04B 5/00

(54) **DÉTECTION DE DISPOSITIFS NFC**
ERKENNUNG VON NFC-GERÄTEN
NFC DEVICE DETECTION

(30) Priorité: 25.06.2019 FR 1906907
(43) Date de publication de la demande: 30.12.2020
(73) Titulaire: STMicroelectronics (Rousset) SAS, 13790 Rousset (FR)
(72) Inventeur: TRAMONI, Alexandre, 83330 LE BEAUSSET (FR); CORDIER, Nicolas, 13080 AIX-EN-PROVENCE (FR)
(74) Mandataire: Cabinet Beaumont

(56) Documents cités:
- EP-A1- 3 498 348
- EP-A2- 2 683 090
- US-A1- 2016 004 894

## Description

### Domaine technique

La présente description concerne de façon générale les circuits électroniques et, plus particulièrement, les transpondeurs électromagnétiques. La présente description s'applique plus particulièrement aux dispositifs électroniques intégrant un circuit de communication en champ proche (NFC - Near Field Communication) et notamment à la détection d'un dispositif par champ proche.

### Technique antérieure

Les systèmes de communication à transpondeurs électromagnétiques sont de plus en plus fréquents, en particulier depuis le développement des technologies de communication en champ proche (NFC - Near Field Communication) .

Ces systèmes exploitent un champ électromagnétique radiofréquence généré par un dispositif (terminal ou lecteur) pour communiquer avec un autre dispositif (carte).

Dans les systèmes récents, un même dispositif NFC peut, tour à tour, opérer en mode carte ou en mode lecteur. Cela se produit, par exemple, dans le cas d'une communication en champ proche entre deux téléphones mobiles, ou bien entre un téléphone mobile et un point de vente mobile (mobile Point Of Sale - mPOS).

On cherche donc à pouvoir configurer un même dispositif NFC tantôt en mode carte et tantôt en mode lecteur, selon la nature de l'autre dispositif à détecter ou selon le type de communication à établir avec cet autre dispositif.

Le document EP2683090 décrit un appareil et un procédé pour faire fonctionner des antennes.

Le document EP3498348 décrit une détection d'orientation RFID.

Le document US2016004894 décrit un lecteur d'étiquette RFID pour la communication sans fil en champ proche et un système de communication sans fil en champ proche.

### Résumé de l'invention

Il existe un besoin d'améliorer des processus de détection de dispositifs NFC par champ proche.

Un mode de réalisation pallie tout ou partie des inconvénients des dispositifs NFC connus et de leur système de détection en champ proche.

L'invention est définie par les caractéristiques des revendications annexées.

### Brève description des dessins

Ces caractéristiques et avantages, ainsi que d'autres, seront exposés en détail dans la description suivante de modes de réalisation et modes de mise en œuvre particuliers faite à titre non limitatif en relation avec les figures jointes parmi lesquelles :
la figure 1 représente, de façon très schématique et sous forme de blocs, un exemple de système de communication en champ proche du type auquel s'appliquent, à titre d'exemple, des modes de réalisation décrits ;
la figure 2 représente, de façon très schématique et sous forme de blocs, un mode de réalisation d'un circuit de communication en champ proche ;
la figure 3 illustre, par des chronogrammes, un mode de mise en œuvre d'un procédé de commande du circuit décrit en relation avec la figure 2 ;
la figure 4 illustre, par des chronogrammes, un autre mode de mise en œuvre d'un procédé de commande du circuit décrit en relation avec la figure 2 ;
la figure 5 illustre, par des chronogrammes, encore un autre mode de mise en œuvre d'un procédé de commande du circuit décrit en relation avec la figure 2 ; et
la figure 6 représente, de façon très schématique et sous forme de blocs, un exemple de téléphone mobile comportant un circuit de détection en champ proche du type de celui décrit en relation avec la figure 2.

### Description des modes de réalisation

De mêmes éléments ont été désignés par de mêmes références dans les différentes figures. En particulier, les éléments structurels et/ou fonctionnels communs aux différents modes de réalisation et modes de mise en œuvre peuvent présenter les mêmes références et peuvent disposer de propriétés structurelles, dimensionnelles et matérielles identiques.

Par souci de clarté, seuls les étapes et éléments utiles à la compréhension des modes de réalisation et modes de mise en œuvre décrits ont été représentés et sont détaillés. En particulier, la génération des signaux radiofréquence et leur interprétation n'ont pas été détaillées, les modes de réalisation et modes de mise en œuvre décrits étant compatibles avec les techniques usuelles de génération et d'interprétation de ces signaux.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

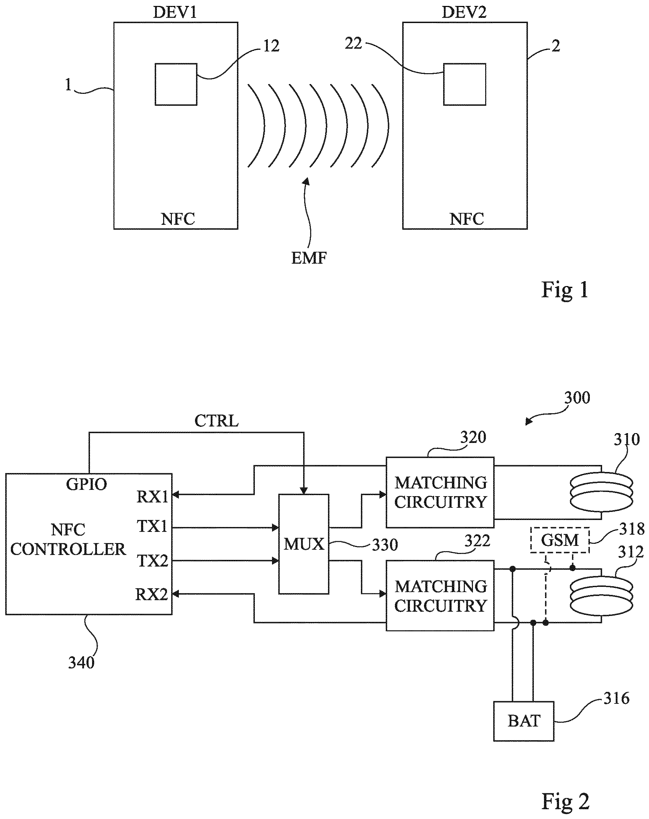

La figure 1 représente, de façon très schématique et sous forme de blocs, un exemple de système de communication en champ proche du type auquel s'appliquent, à titre d'exemple, des modes de réalisation décrits.

On suppose le cas de deux dispositifs électroniques similaires, par exemple deux téléphones mobiles, mais tout ce qui va être décrit s'applique plus généralement à tout système dans lequel un lecteur, borne ou terminal, doit détecter et communiquer avec un transpondeur électromagnétique ou une étiquette électronique (TAG). Pour simplifier, on fera référence à des dispositifs NFC pour designer des dispositifs électroniques intégrant des circuits de communication en champ proche.

Deux dispositifs NFC 1 (DEV1) et 2 (DEV2) sont susceptibles de communiquer par couplage électromagnétique en champ proche. Selon les applications, pour une communication, l'un des dispositifs fonctionne en mode dit lecteur tandis que l'autre fonctionne en mode dit carte, ou les deux dispositifs communiquent en mode poste à poste (peer-to-peer - P2P). Chaque dispositif comporte divers circuits électroniques 12 et 22 de génération et/ou de détection d'un signal radiofréquence à l'aide d'une antenne (non représentée). Le champ radiofréquence généré par l'un des dispositifs est capté par l'autre dispositif qui se trouve à portée.

Lorsqu'un dispositif (par exemple le dispositif 1) émet un champ électromagnétique (EMF) pour initier une communication avec un autre dispositif NFC (par exemple le dispositif 2), ce champ est capté par ce dispositif 2 dès qu'il se trouve à portée. Le couplage entre les deux circuits oscillants (celui de l'antenne du dispositif 2 et celui de l'antenne du dispositif 1) se traduit par une variation de la charge constituée par les circuits du dispositif 2 sur le circuit oscillant de génération du champ du dispositif 1. En pratique, pour une communication, la variation correspondante de phase ou d'amplitude du champ émis est détectée par le dispositif 1 qui entame alors un protocole de communication NFC avec le dispositif 2. Côté dispositif 1, on détecte en pratique si l'amplitude de la tension aux bornes du circuit oscillant et/ou le déphasage par rapport au signal généré par le circuit 12 sortent de fenêtres d'amplitudes et de phases définies chacune par un seuil inférieur et un seuil supérieur.

Dans le cas d'une communication, une fois que le dispositif 1 a détecté la présence du dispositif 2 dans son champ, il entame une procédure d'établissement de communication, mettant en œuvre des émissions de requêtes par le dispositif 1 et de réponses par le dispositif 2 (séquence d'interrogation telle que définie dans la norme NFC Forum). Les circuits du dispositif 2, s'ils sont en veille, sont alors réactivés.

Pour des raisons d'économie d'énergie, le dispositif émetteur 1, qu'il soit raccordé sur le secteur de distribution électrique ou alimenté directement ou indirectement par batterie, est mis en veille lorsqu'il n'est pas utilisé pour une communication. Les dispositifs NFC sont généralement équipés de circuits de détection d'un autre dispositif se trouvant dans leur champ afin de sortir d'un mode de veille à des fins de communication.

Dans certaines applications, lorsqu'un dispositif NFC n'est pas en cours de communication, il est commuté en mode dit basse consommation (Low Power) afin de réduire l'énergie consommée. Cela est en particulier le cas pour les dispositifs alimentés par batteries. Dans ce mode basse consommation, un dispositif configuré en mode lecteur exécute un mode dit de détection de carte (Tag detection ou Card detection) et exécute des boucles de détection. La détection est similaire à celle opérée lorsque le dispositif n'est pas en mode basse consommation, mais la différence est que, en mode normal, l'émission de la porteuse est continue et inclut périodiquement des trames d'interrogation alors que, pour réduire la consommation, l'émission du champ s'effectue par salves (burst) périodiques et sans trame d'interrogation lorsque le dispositif est en mode basse consommation. Les salves sont d'une durée nettement inférieure (dans un rapport d'au moins dix, de préférence d'au moins cent) à la durée d'une requête d'interrogation d'une carte en mode normal.

Lorsqu'il est en mode basse consommation, un dispositif NFC capable d'opérer à la fois en mode lecteur et en mode carte alterne des phases d'émission de champ et des phases de détection de champ. Les phases d'émission de champ correspondent à l'émission de trames d'interrogation pour détecter la présence d'un dispositif en mode carte à portée. Les phases de détection de champ permettent au dispositif de détecter la présence d'un champ émis par un autre dispositif en mode lecteur.

Les circuits de communication en champ proche sont de plus en plus souvent intégrés dans des dispositifs ayant d'autres fonctions de communication que NFC. C'est le cas notamment des téléphones mobiles qui intègrent des circuits et fonctions de téléphonie mobile et des circuits et fonctions NFC et, le plus souvent, également des fonctions et circuits WiFi, Bluetooth, etc. Un autre exemple est les ordinateurs portables qui sont susceptibles de constituer des dispositifs NFC tout en ayant des circuits et fonctions WiFi, Bluetooth, etc.

Les modes de réalisation décrits tirent profit de la présence de plusieurs circuits et fonctions de communication radiofréquences équipant des dispositifs NFC, et prévoient d'utiliser ces différents circuits afin d'améliorer les communications NFC. Ces modes de réalisation s'appliquent notamment à des dispositifs pourvus de plusieurs antennes. En particulier, les modes de réalisation décrits prennent pour exemple des dispositifs équipés d'une antenne dédiée aux communications NFC et d'une autre antenne normalement dédiée à une autre fonction, par exemple les communications GSM ou WiFi. Cela évite de complexifier le dispositif en l'équipant de deux antennes dédiées aux communications NFC.

Selon un mode de réalisation, deux antennes du dispositif sont utilisables en mode carte et en mode lecteur. Cela correspond à une situation où le dispositif effectue alternativement, sans action externe, des phases de détection de champ et des phases d'émission de champ sur l'une et l'autre de ses deux antennes.

Selon un autre mode de réalisation, on prévoit de sélectionner automatiquement une antenne pour un fonctionnement en mode carte différente de l'antenne utilisée en mode lecteur. Selon un mode de réalisation préféré, on tire profit de la présence, dans le dispositif, d'une antenne dédiée au chargement sans fil (wireless charging) d'une batterie du dispositif ou d'une antenne de point de vente mobile (mobile Point Of Sale - mPOS). Cela permet d'utiliser une antenne sensible, par exemple l'antenne de communication dédiée NFC, pour un fonctionnement en mode carte et de profiter de la présence d'une antenne de plus grande taille pour un fonctionnement en mode lecteur afin d'émettre un champ avec plus d'énergie et améliorer ainsi la portée du lecteur.

On pourrait penser effectuer une commutation manuelle d'une antenne à l'autre, mais cela nécessiterait une action d'un utilisateur. De plus, cela ne permettrait pas de garantir la détection d'une carte ou d'un lecteur à proximité, le dispositif risquant par exemple, lorsque l'on souhaite détecter une carte située à portée, d'être configuré pour recevoir un champ au lieu d'être configuré pour émettre un champ.

La figure 2 représente, de façon très schématique et sous forme de blocs, un mode de réalisation d'un circuit 300 de communication en champ proche. Ce circuit 300 appartient à un dispositif NFC pouvant être configuré tantôt en mode carte et tantôt en mode lecteur, par exemple le dispositif NFC 1 de la figure 1.

Selon ce mode de réalisation, le circuit 300 de communication en champ proche comporte une première antenne 310 et une deuxième antenne 312. Dans l'exemple de la figure 2, la première antenne 310 est une antenne dédiée aux communications NFC tandis que la deuxième antenne 312 est reliée à une batterie 316 (BAT) d'alimentation du dispositif 1. La deuxième antenne 312 permet, le cas échéant, de recharger sans fil la batterie 316 du dispositif.

En variante, la deuxième antenne 312 est une antenne dédiée à des fonctions de téléphonie mobile. Cette antenne est, par exemple, reliée à un module 318 (GSM) de téléphonie sans fil (représenté en pointillé, en figure 2).

En figure 2, les antennes 310 et 312 sont en outre respectivement reliées, de préférence connectées, à un premier circuit 320 (MATCHING CIRCUITRY) d'adaptation d'antenne et à un deuxième circuit 322 (MATCHING CIRCUITRY) d'adaptation d'antenne. Ces circuits 320 et 322 sont, par exemple, des dispositifs d'adaptation d'impédance permettant d'optimiser l'émission ou la réception de signaux NFC, à une fréquence de 13,56 MHz, via les antennes 310 et 312.

Les circuits d'adaptation 320 et 322 sont tous deux reliés à un multiplexeur 330 (MUX) et à un contrôleur NFC 340 (NFC CONTROLLER) ou routeur NFC. Le multiplexeur 330 permet ici d'émettre des signaux issus du contrôleur NFC 340 vers l'un ou l'autre des circuits d'adaptation 320 et 322, auxquels sont respectivement connectées les antennes 310 et 312. En d'autres termes, le multiplexeur 330 permet d'aiguiller, vers l'une ou l'autre des antennes 310 et 312, des signaux NFC à émettre par le dispositif NFC 1 comportant le circuit 300.

Dans l'exemple de la figure 2 :
une première borne (TX1) de sortie du contrôleur NFC 340 est reliée, de préférence connectée, à une entrée du multiplexeur 330 ;
une deuxième borne (TX2) de sortie du contrôleur NFC 340 est reliée, de préférence connectée, à une autre entrée du multiplexeur 330 ;
une sortie du multiplexeur 330 est reliée, de préférence connectée, à une entrée du premier circuit 320 d'adaptation d'antenne ; et
une autre sortie du multiplexeur 330 est reliée, de préférence connectée, à une entrée du deuxième circuit 322 d'adaptation d'antenne.

Des signaux captés (ou reçus) par la première antenne 310 ou par la deuxième antenne 312 sont, dans cet exemple, directement transmis au contrôleur NFC 340, sans passer par le multiplexeur 330. Ainsi, toujours dans l'exemple de la figure 2 :
une première borne (RX1) d'entrée du contrôleur NFC 340 est reliée, de préférence connectée, à une sortie du premier circuit 320 d'adaptation d'antenne ; et
une deuxième borne (RX2) d'entrée du contrôleur NFC 340 est reliée, de préférence connectée, à une sortie du deuxième circuit 322 d'adaptation d'antenne.

Selon ce mode de réalisation, un port (GPIO) d'entrée-sortie à usage général (General Purpose Input/Output - GPIO) du contrôleur NFC 340 émet vers le multiplexeur 330 un signal numérique (CTRL) de commande. Le signal CTRL est, de préférence, un signal binaire dont, par exemple :
un état haut (ou niveau haut) commande l'activation, via le multiplexeur 330, de l'une des antennes, parmi la première antenne 310 et la deuxième antenne 312, pour l'émission de signaux ; et
un état bas (ou niveau bas) commande l'activation, via le multiplexeur 330, de l'autre antenne, parmi la première antenne 310 et la deuxième antenne 312, pour l'émission de signaux.

En d'autres termes, l'état haut ou bas du signal CTRL permet au multiplexeur 330 du circuit 300 d'aiguiller, vers l'une ou l'autre des antennes 310 et 312, les signaux NFC à émettre. Le signal CTRL est en particulier adapté à activer l'une ou l'autre des deux antennes 310 et 312 du dispositif NFC 1 pendant des phases de détection d'un autre dispositif NFC (par exemple, le dispositif NFC 2 de la figure 1) se trouvant à proximité.

Selon un mode de réalisation préféré, le signal CTRL est commuté vers son état haut ou vers son état bas par une machine d'états du contrôleur NFC 340. D'autres modes de génération du signal CTRL peuvent néanmoins être envisagés en fonction de l'application visée. Le signal CTRL peut, par exemple, être généré par un circuit en logique câblée ou par un produit programme d'ordinateur exécuté par un microcontrôleur dédié ou, de manière plus générale, par tout circuit logique et/ou programmé capable de fournir le signal numérique CTRL de commande du multiplexeur 330.

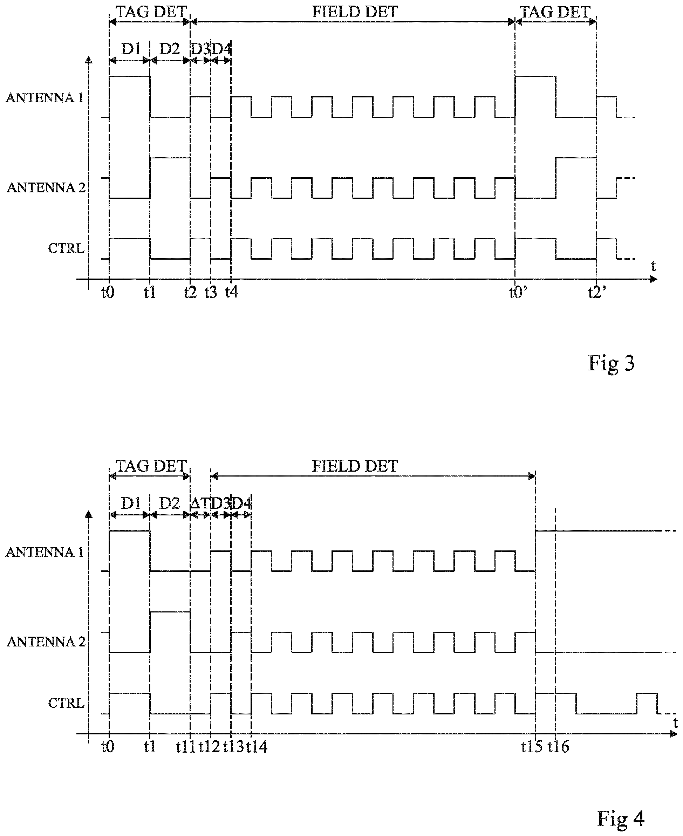

La figure 3 illustre, par des chronogrammes, un mode de mise en œuvre d'un procédé de commande du circuit 300 décrit en relation avec la figure 2. On suppose encore que le circuit 300 appartient à un dispositif NFC, par exemple le dispositif NFC 1 de la figure 1.

La figure 3 représente plus particulièrement l'allure :
d'un premier signal (ANTENNA 1) d'activation d'une première antenne, par exemple la première antenne 310 du circuit 300 de la figure 2 ;
d'un deuxième signal (ANTENNA 2) d'activation d'une deuxième antenne, par exemple la deuxième antenne 312 du circuit 300 de la figure 2 ; et
d'un troisième signal (CTRL) de commande, par exemple le signal CTRL de commande du multiplexeur 330 du circuit 300 de la figure 2.

En figure 3, les phases de détection de carte sont représentées avec une amplitude plus élevée que les phases de détection de champ car la consommation moyenne de la fonction détection de carte est plus importante que la consommation moyenne de la fonction détection de champ. En réalité, le signal CTRL est utilisé pour choisir l'une ou l'autre des antennes mais également pour lancer une séquence (cadencée par la machine d'états) de détection de champ ou de détection de carte. Par exemple, pour la phase de détection de champ, la plus grande partie du temps est utilisée pour démarrer des régulateurs et des oscillateurs et une petite parte de la phase de détection de carte correspond à l'émission des salves (burst) du champ et à l'évaluation de la phase et de l'amplitude du signal.

On considère arbitrairement, dans cet exemple, qu'un état haut du signal CTRL provoque une activation de la première antenne 310 (signal ANTENNA 1 mis à l'état haut) et une désactivation de la deuxième antenne 312 (signal ANTENNA 2 mis à l'état bas). On considère aussi arbitrairement qu'un état bas du signal CTRL provoque, à l'inverse, une activation de la deuxième antenne 312 (signal ANTENNA 2 mis à l'état haut) et une désactivation de la première antenne 310 (signal ANTENNA 1 mis à l'état bas).

Les deux antennes 310 et 312 sont donc activées tour à tour, c'est-à-dire de manière alternative. On fait ainsi en sorte que les antennes 310 et 312 ne soient pas simultanément activées.

À un instant t0, le signal CTRL est commuté vers l'état haut. Cela entraîne simultanément l'activation de la première antenne 310 et la désactivation de la deuxième antenne 312.

À un instant t1, le signal CTRL est commuté vers l'état bas. Cela entraîne simultanément l'activation de la deuxième antenne 312 et la désactivation de la première antenne 310.

À un instant t2, le signal CTRL est commuté vers l'état haut. Cela entraîne simultanément l'activation de la première antenne 310 et la désactivation de la deuxième antenne 312.

À un instant t3, le signal CTRL est commuté vers l'état bas. Cela entraîne simultanément l'activation de la deuxième antenne 312 et la désactivation de la première antenne 310.

À un instant t4, le signal CTRL est commuté vers l'état haut. Cela entraîne simultanément l'activation de la première antenne 310 et la désactivation de la deuxième antenne 312.

Le signal CTRL est ensuite commuté, de façon périodique, entre son état bas et son état haut jusqu'à un instant t0'. Entre les instants t4 et t0', on suppose que :
après chaque commutation vers l'état haut, le signal CTRL demeure dans cet état haut pendant une durée D3 avant d'être mis à l'état bas ; et
après chaque commutation vers l'état bas, le signal CTRL demeure dans cet état bas pendant une durée D4 avant d'être mis à l'état haut.

À partir de l'instant t0', les signaux CTRL, ANTENNA 1 et ANTENNA 2 de la figure 3 continuent d'évoluer de la même façon que ce qui a été précédemment exposé en relation avec les instants t0 à t0'. On répète ainsi, de façon périodique, l'allure des signaux telle que décrite entre les instants t0 et t0'. Une nouvelle phase de détection de carte débute ainsi à l'instant t0' et s'achève à un instant t2', puis une nouvelle phase de détection de champ débute à l'instant t2' et ainsi de suite.

En figure 3, on note :
D1 une durée séparant les instants t0 et t1 ;
D2 une durée séparant les instants t1 et t2 ;
D3 une durée séparant les instants t2 et t3 ; et
D4 une durée séparant les instants t3 et t4.

Entre les instants t0 et t2, c'est-à-dire, dans cet exemple, pendant une durée égale à la somme des durées D1 et D2, le circuit 300 est dans une première phase (TAG DET) de détection de carte (Tag detection ou Card detection). Cette première phase correspond à une situation dans laquelle le dispositif émet un champ électromagnétique, alternativement par sa première antenne 310 et par sa deuxième antenne 312, pour détecter une éventuelle carte (ou récepteur NFC) se situant à proximité. Le dispositif est donc configuré en mode lecteur lors de cette phase de détection de carte.

Entre les instants t2 et t0', c'est-à-dire, dans cet exemple, pendant une durée égale à huit fois la somme des durées D3 et D4, le circuit 300 est dans une deuxième phase (FIELD DET) de détection de champ (Field detection). La deuxième phase correspond à une situation dans laquelle le dispositif cherche à recevoir un champ électromagnétique, alternativement par sa première antenne 310 et par sa deuxième antenne 312, émis par un éventuel lecteur (ou émetteur NFC) se situant à proximité. Le dispositif est donc configuré en mode carte lors de cette phase de détection de champ.

La phase de détection de carte diffère de la phase de détection de champ principalement en ce que les antennes 310 et 312 émettent un champ électromagnétique lors des phases de détection de carte tandis qu'elles n'émettent aucun champ électromagnétique lors des phases de détection de champ. Les périodes actives du mode carte (par exemple entre les instants t2 et t3, pour la première antenne) correspondent à des périodes où les circuits de réception sont temporairement activés (sortie du mode basse consommation).

Selon un mode de réalisation, la durée D1 est environ égale, de préférence égale, à la durée D2 et la durée D3 est environ égale, de préférence égale, à la durée D4. En d'autres termes, on considère alors que les antennes 310 et 312 sont activées pendant des durées sensiblement égales, de préférence égales, lors des phases de détection de carte. On considère, de la même façon, que les antennes 310 et 312 sont activées pendant des durées sensiblement égales, de préférence égales, lors des phases de détection de champ.

Les durées D1 et D2 qui suivent respectivement chaque activation des antennes 310 et 312 lors des phases de détection de carte sont, de préférence, supérieures aux durées D3 et D4 qui suivent respectivement chaque activation des antennes 310 et 312 lors des phases de détection de champ. Le multiplexeur 330 du circuit 300 (figure 2) est alors configuré pour interpréter une durée D1 ou D2 comme une instruction de configuration du dispositif en mode lecteur et une durée D3 ou D4, inférieure aux durées D1 et D2, comme une instruction de configuration du dispositif en mode carte.

Le dispositif NFC est ainsi commuté périodiquement, selon la fréquence de variation du signal CTRL de commande, entre les premières phases de détection de carte et les deuxièmes phases de détection de champ. Pendant une même phase de détection (de carte ou de champ), la première antenne 310 et la deuxième antenne 312 du dispositif NFC sont alternativement activées. Cela permet de tirer profit de la présence, dans le dispositif NFC, de deux antennes 310 et 312 pour optimiser ou améliorer la détection d'un autre dispositif se trouvant à proximité en sélectionnant, une fois la carte ou le lecteur détecté, l'antenne donnant le meilleur résultat.

La commutation périodique entre les premières phases de détection de carte et les deuxièmes phases de détection de champ s'effectue à une fréquence d'au moins 1 Hz, de préférence à une fréquence de 3 Hz ou de 4 Hz. Cette fréquence est ajustée, par exemple, pour permettre une détection suffisamment rapide d'une carte ou d'un lecteur placé à proximité du dispositif NFC. Cette fréquence est, par exemple, ajustée pour permettre au dispositif NFC de détecter une carte ou un lecteur en moins d'une seconde. On garantit ainsi un bon confort d'utilisation (ou une bonne expérience utilisateur) de ce dispositif NFC.

La figure 4 illustre, par des chronogrammes, un autre mode de mise en œuvre d'un procédé de commande du circuit 300 décrit en relation avec la figure 2.

Le mode de mise en œuvre de la figure 4 comprend des éléments communs avec le mode de mise en œuvre de la figure 3. Ces éléments communs ne seront pas détaillés à nouveau ci-après.

Le mode de mise en œuvre de la figure 4 diffère de celui de la figure 3 principalement en ce que le mode de mise en œuvre de la figure 4 prévoit un délai ou intervalle de temps séparant la phase de détection de carte (TAG DET) de la phase de détection de champ (FIELD DET). En figure 4, la phase de détection de carte s'achève, à un instant t11, par la désactivation de la deuxième antenne 312 (passage du signal ANTENNA 2 de l'état haut à l'état bas). La phase de détection de champ débute, à un instant t12, par l'activation de la première antenne 310 (passage du signal ANTENNA 1 de l'état bas à l'état haut). Ainsi, dans l'exemple de la figure 4, la phase de détection de carte est séparée de la phase de détection de champ par une durée ΔT (un intervalle de temps ΔT), séparant les instants t11 et t12, pendant laquelle aucune des deux antennes 310 et 312 n'est activée.

Selon un mode de réalisation, l'allure du signal CTRL est modifiée par rapport au signal CTRL de la figure 3. Dans l'exemple de la figure 4, le signal CTRL demeure à l'état bas après l'instant t11 (après la désactivation de la deuxième antenne 312 au cours de la phase de détection de carte) pendant la durée ΔT. Cette durée ΔT est interprétée, par les circuits associés aux antennes 310 et 312, comme une consigne de désactivation de ces antennes 310, 312.

Lorsqu'une antenne, par exemple l'antenne 312, est activée lors d'une phase de détection de carte, cette antenne 312 émet, comme exposé en relation avec la figure 1, un champ électromagnétique. Lorsque cette même antenne 312 est désactivée, ce champ électromagnétique ne disparaît pas instantanément. Autrement dit, l'intensité du champ électromagnétique émis par l'antenne 312 s'atténue (ou décroît) de façon progressive après la désactivation de cette antenne 312. Un champ électromagnétique résiduel ou rémanent subsiste donc dans l'antenne 312 après sa désactivation. La décroissance de l'intensité de ce champ résiduel après désactivation de l'antenne 312 peut, dans certains cas, être suffisamment lente pour qu'un phénomène de résonance vienne perturber ou interférer avec l'antenne 310.

Selon un mode de réalisation, un autre intervalle temporel ΔT' (non représenté) sépare d'autres opérations d'activation et de désactivation des antennes 310 et 312. Cet autre intervalle temporel ΔT' sépare, par exemple, la désactivation de la première antenne 310 de l'activation de la deuxième antenne 312 lors d'une phase de détection de carte (c'est-à-dire entre les durées D1 et D2, en figure 4). La durée l'intervalle temporel ΔT' est, de préférence, égale à celle de l'intervalle de temps ΔT.

Selon un mode de réalisation, un intervalle temporel ΔT ou ΔT' succède à chaque opération de désactivation des antennes 310 et 312. En d'autres termes, un intervalle temporel ΔT ou ΔT' précède chaque opération d'activation des antennes 310 et 312.

Par la suite, on suppose que seul un délai ΔT sépare les phases de détection de carte des phases de détection de champ, comme illustré en figure 4.

Un avantage de la présence du délai ΔT est que cela permet d'attendre que le champ électromagnétique résiduel, émis par l'antenne 312 après sa désactivation, soit suffisamment faible pour éviter qu'un tel phénomène ne se produise au moment de l'activation de l'antenne 310 lors de la phase de détection de champ suivante. En fonction de l'application considérée, le délai ΔT est par conséquent ajusté afin d'éviter de telles perturbations.

Selon un mode de réalisation, le délai ΔT est de l'ordre de 0,1 µs à 1 µs, de préférence d'environ 1 µs.

À un instant t13, le signal CTRL est commuté vers l'état bas. Cela entraîne simultanément l'activation de la deuxième antenne 312 et la désactivation de la première antenne 310.

À un instant t14, le signal CTRL est commuté vers l'état haut. Cela entraîne simultanément l'activation de la première antenne 310 et la désactivation de la deuxième antenne 312.

Le signal CTRL est ensuite commuté à plusieurs reprises entre son état bas et son état haut jusqu'à un instant t15, marquant la fin de la phase de détection de champ.

Dans l'exemple de la figure 4, on suppose qu'une carte (ou un dispositif en mode carte) est détectée par l'antenne 310 du dispositif à un instant t16. Une communication s'établit ainsi entre le dispositif et la carte, par l'intermédiaire de l'antenne 310 et de ses circuits associés. À partir de cet instant t16, le dispositif sort alors du mode basse consommation et se met ainsi à émettre en continu un champ électromagnétique. Cela se traduit, en figure 4, par le fait que le signal ANTENNA 1 demeure à l'état haut jusqu'à la fin de la communication tandis que le signal ANTENNA 2 est maintenu à l'état bas pendant cette même communication.

À l'inverse, si pendant une phase de détection de champ un lecteur est détecté (un champ est capté par l'une des antennes), les circuits correspondants de détection sont activés de façon continue pour l'établissement d'une communication avec le lecteur. Dans le cas où un champ est capté par la deuxième antenne, le signal ANTENNA 2 reste au niveau haut et le signal ANTENNA 1 reste au niveau bas pendant la communication.

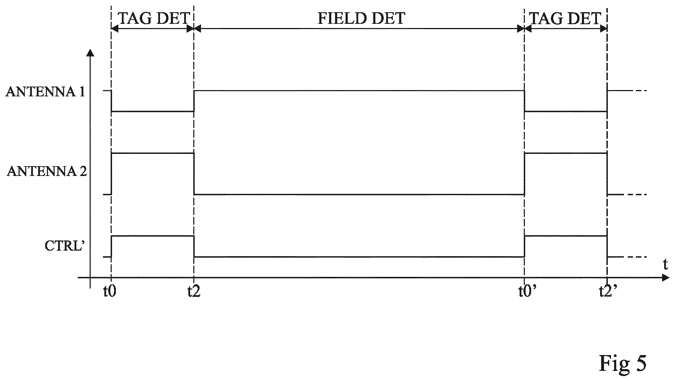

La figure 5 illustre, par des chronogrammes, encore un autre mode de mise en œuvre d'un procédé de commande du circuit 300 décrit en relation avec la figure 2.

Selon ce mode de mise en œuvre, la figure 5 représente plus particulièrement l'allure :
du premier signal (ANTENNA 1) d'activation de la première antenne 310 du circuit 300 de la figure 2 ;
du deuxième signal (ANTENNA 2) d'activation de la deuxième antenne 312 du circuit 300 de la figure 2 ; et
d'un troisième signal (CTRL') de commande du multiplexeur 330 du circuit 300 de la figure 2.

On considère arbitrairement, dans cet exemple, qu'un état haut du signal CTRL' provoque une activation de la deuxième antenne 312 (signal ANTENNA 2 mis à l'état haut) et une désactivation de la première antenne 310 (signal ANTENNA 1 mis à l'état bas). On considère aussi arbitrairement qu'un état bas du signal CTRL' provoque, à l'inverse, une activation de la première antenne 310 (signal ANTENNA 1 mis à l'état haut) et une désactivation de la deuxième antenne 312 (signal ANTENNA 2 mis à l'état bas).

On suppose en outre, toujours dans cet exemple, que la première antenne 310 est sélectionnée pour (dédiée à) la détection en mode carte tandis que la deuxième antenne 312 est sélectionnée pour (dédiée à) la détection en mode lecteur. Cela correspond, par exemple, au cas d'un dispositif équipé d'une première antenne 310 dédiée aux communications NFC et d'une deuxième antenne 312 utilisée pour la recharge sans fil du dispositif ou pour des fonctions de téléphonie mobile, comme exposé en relation avec la figure 1.

Les deux antennes 310 et 312 sont donc activées tour à tour, c'est-à-dire de manière alternative, d'une phase de détection à l'autre. Dans l'exemple de la figure 5, seule l'antenne 310 est activée pendant les phases de détection de champ tandis que seule l'antenne 312 est activée pendant les phases de détection de carte. Dans l'exemple de la figure 5, un état haut du signal CTRL' correspond ainsi à une phase de détection de carte, tandis qu'un état bas du signal CTRL' correspond à une phase de détection de champ.

À un instant t0, le signal CTRL' est commuté vers l'état haut. Cela entraîne simultanément l'activation de la deuxième antenne 312 et la désactivation de la première antenne 310. L'instant t0 marque ainsi le début de la phase de détection de carte (TAG DET) à l'aide de la deuxième antenne 312.

À un instant t2, le signal CTRL' est commuté vers l'état bas. Cela entraîne simultanément l'activation de la première antenne 310 et la désactivation de la deuxième antenne 312. L'instant t2 marque ainsi la fin de la phase de détection de carte à l'aide de la deuxième antenne 312 et le début de la phase de détection de champ (FIELD DET) à l'aide de la première antenne 310.

À un instant t0', le signal CTRL' est commuté vers l'état haut. Cela entraîne simultanément l'activation de la deuxième antenne 312 et la désactivation de la première antenne 310. L'instant t0' marque ainsi la fin de la phase de détection de champ à l'aide de la première antenne 310 et le début d'une nouvelle phase de détection de carte à l'aide de la deuxième antenne 312.

À un instant t2', le signal CTRL' est commuté vers l'état haut. Cela entraîne simultanément l'activation de la deuxième antenne 312 et la désactivation de la première antenne 310. L'instant t2' marque ainsi la fin de la phase de détection de carte et le début d'une nouvelle phase de détection de champ.

À partir de l'instant t0', les signaux CTRL', ANTENNA 1 et ANTENNA 2 de la figure 5 continuent d'évoluer de la même façon que ce qui a été précédemment exposé en relation avec les instants t0 à t0'. On répète ainsi, de façon périodique, l'allure des signaux telle que décrite entre les instants t0 et t0'.

Il est à noter que le mode de mise en œuvre de la figure 5 peut être adapté pour introduire un délai avant chaque activation de l'antenne 310 (ce qui équivaut à prévoir un délai à la suite de chaque désactivation de l'antenne 312) pour éviter d'éventuelles perturbations. Cette adaptation est à la portée de l'homme du métier à partir des indications fournies en relation avec les figures 3 et 4 ci-dessus.

Les modes de mise en œuvre précédemment décrits en relation avec les figures 3 à 5 peuvent, en outre, être combinés ou étendus. Dans le cas d'un dispositif comportant plus de deux antennes (par exemple, un dispositif comportant trois antennes) susceptibles d'être utilisées pour des communications NFC, on peut en particulier prévoir un mode de mise en œuvre dans lequel toutes les antennes sont successivement activées au cours de chaque phase de détection de champ et successivement activées au cours de chaque phase de détection de carte.

On peut également prévoir un autre mode de mise en œuvre dans lequel une ou plusieurs antennes du dispositif sont allouées aux phases de détection de carte, ces antennes étant alors successivement activées au cours d'une même phase de détection de carte, tandis qu'une ou plusieurs autres antennes sont allouées aux phases de détection de champ, ces autres antennes étant alors successivement activées au cours d'une même phase de détection de champ. Les antennes allouées aux phases de détection de champ peuvent être identiques ou différentes des antennes allouées aux phases de détection de carte.

Ces modes de mise en œuvre issus de la combinaison ou de l'adaptation des modes de mise en œuvre décrits en relation avec les figures 3 à 5 sont à la portée de l'homme du métier à partir des indications fournies ci-dessus.

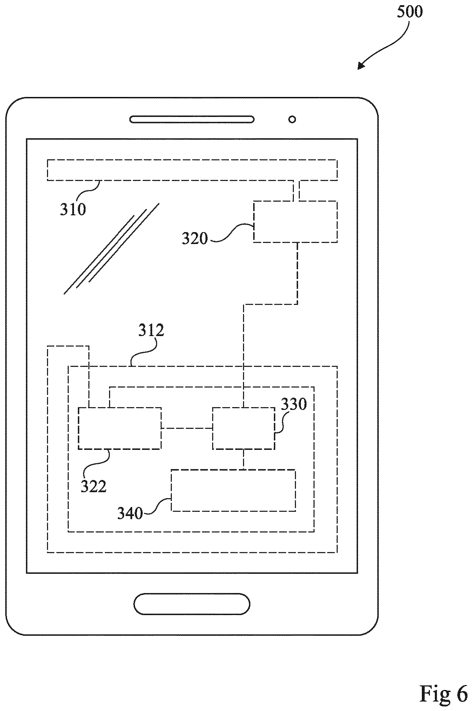

La figure 6 représente, de façon très schématique et sous forme de blocs, un exemple de téléphone mobile comportant un circuit de détection en champ proche du type du circuit 300 décrit en relation avec la figure 2.

La figure 6 illustre, plus précisément, un exemple d'intégration d'éléments du circuit 300 de la figure 2 à l'intérieur du téléphone mobile 500. Ainsi, dans l'exemple de la figure 6, le téléphone mobile 500 comporte des éléments semblables à ceux du circuit 300 de la figure 2 (en figure 6, ces éléments sont représentés en pointillé). Ces éléments peuvent néanmoins, dans l'exemple d'intégration illustré en figure 6, être reliés par des liaisons représentées différemment par rapport à la figure 2.

Dans le cas du téléphone mobile 500 tel qu'illustré en figure 6 :
la première antenne 310 est, par exemple, une antenne dédiée aux communications NFC ou une antenne partagée pour des communications NFC et pour des communications GSM ; et
la deuxième antenne 312 est, par exemple, une antenne de recharge sans fil (wireless charging), par induction, d'une batterie (non représentée en figure 6) du téléphone 500.

Le téléphone 500 comporte le multiplexeur 330, commandé par le contrôleur NFC 340 et connecté respectivement aux circuits d'adaptation 320 et 322 des antennes 310 et 312. Cela permet par exemple au téléphone 500 de commuter automatiquement, c'est-à-dire sans action de la part d'un utilisateur, entre les phases de détection de carte et les phases de détection de champ, les deux antennes 310 et 312 de ce téléphone 500 étant alternativement activées au cours d'une même phase.

Divers modes de réalisation, modes de mise en œuvre et variantes ont été décrits. L'homme de l'art comprendra que certaines caractéristiques de ces divers modes de réalisation, modes de mise en œuvre et variantes pourraient être combinées, et d'autres variantes apparaîtront à l'homme de l'art. En particulier, ce qui est exposé plus particulièrement en relation avec un exemple d'application à une détection d'une carte ou d'un lecteur par un téléphone mobile s'applique plus généralement à une détection d'une carte ou d'un lecteur par tout type d'équipement NFC susceptible de mettre en œuvre ces deux modes de détection.

Enfin, la mise en œuvre pratique des modes de réalisation, modes de mise en œuvre et variantes décrits est à la portée de l'homme du métier à partir des indications fonctionnelles données ci-dessus. En particulier, les nombres d'alternances entre les deux antennes, lors des phases de détection de carte et des phases de détection de champ, peuvent être modifiés en fonction de l'application.

## Revendications

1. Procédé de commutation d'un dispositif NFC (1 ; 500) entre des premières phases de détection de champ (FIELD DET) et des deuxièmes phases de détection de carte (TAG DET), dans lequel :
au moins une première antenne (310) et au moins une deuxième antenne (312) du dispositif NFC sont successivement activées pendant chaque première phase et pendant chaque deuxième phase ; ou
seule une première antenne (310) du dispositif NFC est activée pendant chaque première phase et seule une deuxième antenne (312) du dispositif NFC, distincte de la première antenne (310), est activée pendant chaque deuxième phase.

2. Circuit de commutation d'un dispositif NFC (1 ; 500) entre des premières phases de détection de champ (FIELD DET) et des deuxièmes phases de détection de carte (TAG DET), dans lequel :
au moins une première antenne (310) et au moins une deuxième antenne (312) du dispositif NFC sont successivement activées pendant chaque première phase et pendant chaque deuxième phase ; ou
seule une première antenne (310) du dispositif NFC est activée pendant chaque première phase et seule une deuxième antenne (312) du dispositif NFC, distincte de la première antenne (310), est activée pendant chaque deuxième phase.

3. Dispositif NFC comportant un circuit (300) selon la revendication 2 et/ou une machine d'états adaptée à mettre en œuvre le procédé selon la revendication 1.

4. Produit programme d'ordinateur comportant des instructions pour la mise en œuvre du procédé selon la revendication 1.

5. Procédé selon la revendication 1, ou circuit selon la revendication 2, ou dispositif selon la revendication 3, ou produit programme selon la revendication 4, dans lequel la commutation s'effectue périodiquement.

6. Procédé selon la revendication 1 ou 5, ou circuit selon la revendication 2 ou 5, ou dispositif selon la revendication 3 ou 5, ou produit programme selon la revendication 4 ou 5, dans lequel la commutation s'effectue à une fréquence d'au moins 1 Hz, de préférence à une fréquence de 3 Hz ou de 4 Hz.

7. Procédé selon la revendication 1, 5 ou 6, ou circuit selon la revendication 2, 5 ou 6, ou dispositif selon la revendication 3, 5 ou 6, ou produit programme selon l'une quelconque des revendications 4 à 6, dans lequel un intervalle de temps (ΔT) sépare la première phase (TAG DET) de la deuxième phase (FIELD DET).

8. Procédé selon l'une quelconque des revendications 1, 5 à 7, ou circuit selon l'une quelconque des revendications 2, 5 à 7, ou dispositif selon l'une quelconque des revendications 3, 5 à 7, ou produit programme selon l'une quelconque des revendication 4 à 7, dans lequel :
l'une parmi les première et deuxième antennes (310, 312) est une antenne de recharge sans contact du dispositif NFC (500) ; et
l'autre parmi les première et deuxième antennes (310, 312) est une antenne partagée pour mettre en œuvre des communications GSM et NFC.

9. Procédé selon l'une quelconque des revendications 1, 5 à 8, ou circuit selon l'une quelconque des revendications 2, 5 à 8, ou dispositif selon l'une quelconque des revendications 3, 5 à 8, ou produit programme selon l'une quelconque des revendication 4 à 8, dans lequel :
la première antenne (310) est connectée à un premier circuit (320) d'adaptation ; et
la deuxième antenne (312) est connectée à un deuxième circuit (322) d'adaptation,
les premier et deuxième circuits d'adaptation étant reliés à un multiplexeur (330).

10. Procédé, circuit, dispositif ou produit programme selon la revendication 9, dans lequel le multiplexeur (330) est commandé par un signal digital de commutation (CTRL ; CTRL').

11. Procédé, circuit, dispositif ou produit programme selon la revendication 10, dans lequel un routeur (340) du dispositif NFC (500) fournit le signal digital de commutation (CTRL ; CTRL').

12. Procédé selon l'une quelconque des revendications 1, 5 à 11, ou circuit selon l'une quelconque des revendications 2, 5 à 11, ou dispositif selon l'une quelconque des revendications 3, 5 à 11, ou produit programme selon l'une quelconque des revendication 4 à 11, dans lequel la commutation s'opère lorsque le dispositif NFC (1 ; 500) est en mode basse consommation.

## Patentansprüche

1. Verfahren zum Umschalten eines NFC-Geräts (1; 500) zwischen ersten Felderkennungsphasen (FIELD DET) und zweiten Kartenerkennungsphasen (TAG DET), wobei:
mindestens eine erste Antenne (310) und mindestens eine zweite Antenne (312) des NFC-Geräts nacheinander während jeder ersten Phase und während jeder zweiten Phase aktiviert werden; oder
nur eine erste Antenne (310) des NFC-Geräts während jeder ersten Phase aktiviert wird und nur eine zweite Antenne (312) des NFC-Geräts, die sich von der ersten Antenne (310) unterscheidet, während jeder zweiten Phase aktiviert wird.

2. Schaltkreis zum Umschalten eines NFC-Geräts (1; 500) zwischen ersten Felderkennungsphasen (FIELD DET) und zweiten Kartenerkennungsphasen (TAG DET), wobei:
mindestens eine erste Antenne (310) und mindestens eine zweite Antenne (312) des NFC-Geräts nacheinander während jeder ersten Phase und während jeder zweiten Phase aktiviert werden; oder
nur eine erste Antenne (310) des NFC-Geräts während jeder ersten Phase aktiviert wird und nur eine zweite Antenne (312) des NFC-Geräts, die sich von der ersten Antenne (310) unterscheidet, während jeder zweiten Phase aktiviert wird.

3. NFC-Gerät mit einer Schaltung (300) nach Anspruch 2 und/oder einem endlichen Automaten, der zur Implementierung des Verfahrens nach Anspruch 1 geeignet ist.

4. Computerprogrammprodukt mit Anweisungen zur Implementierung des Verfahrens nach Anspruch 1.

5. Verfahren nach Anspruch 1 oder Schaltung nach Anspruch 2 oder Gerät nach Anspruch 3 oder Programmprodukt nach Anspruch 4, wobei das Umschalten periodisch durchgeführt wird.

6. Verfahren nach Anspruch 1 oder 5, oder Schaltung nach Anspruch 2 oder 5, oder Gerät nach Anspruch 3 oder 5, oder Programmprodukt nach Anspruch 4 oder 5, wobei das Schalten mit einer Frequenz von mindestens 1 Hz, vorzugsweise mit einer Frequenz von 3 Hz oder 4 Hz, durchgeführt wird.

7. Verfahren nach Anspruch 1, 5 oder 6, oder Schaltkreis nach Anspruch 2, 5 oder 6, oder Gerät nach Anspruch 3, 5 oder 6, oder Programmprodukt nach einem der Ansprüche 4 bis 6, wobei ein Zeitintervall (ΔT) die erste Phase (TAG DET) von der zweiten Phase (FIELD DET) trennt.

8. Verfahren nach einem der Ansprüche 1, 5 bis 7 oder Schaltung nach einem der Ansprüche 2, 5 bis 7 oder Gerät nach einem der Ansprüche 3, 5 bis 7 oder Programmprodukt nach einem der Ansprüche 4 bis 7, wobei:
eine der ersten und zweiten Antennen (310, 312) eine kontaktlose Ladeantenne des NFC-Geräts (500) ist; und
die andere der ersten und zweiten Antennen (310, 312) eine gemeinsam genutzte Antenne zum Implementieren von GSM- und NFC-Kommunikation ist.

9. Verfahren nach einem der Ansprüche 1, 5 bis 8 oder Schaltung nach einem der Ansprüche 2, 5 bis 8 oder Gerät nach einem der Ansprüche 3, 5 bis 8 oder Programmprodukt nach einem der Ansprüche 4 bis 8, wobei:
die erste Antenne (310) mit einer ersten Anpassungsschaltung (320) verbunden ist; und
die zweite Antenne (312) mit einer zweiten Anpassungsschaltung (322) verbunden ist,
wobei die ersten und zweiten Anpassungsschaltungen mit einem Multiplexer (330) gekoppelt sind.

10. Verfahren, Schaltung, Gerät oder Programmprodukt nach Anspruch 9, wobei der Multiplexer (330) durch ein digitales Schaltsignal (CTRL; CTRL') gesteuert wird.

11. Verfahren, Schaltkreis, Gerät oder Programmprodukt nach Anspruch 10, wobei ein Router (340) des NFC-Geräts (500) das digitale Schaltsignal (CTRL; CTRL') liefert.

12. Verfahren nach einem der Ansprüche 1, 5 bis 11 oder Schaltung nach einem der Ansprüche 2, 5 bis 11 oder Gerät nach einem der Ansprüche 3, 5 bis 11 oder Programmprodukt nach einem der Ansprüche 4 bis 11, wobei das Schalten durchgeführt wird, wenn sich das NFC-Gerät (1; 500) im Energiesparmodus befindet.

## Claims

1. Method for switching an NFC device (1; 500) between first field detection phases (FIELD DET) and second card detection phases (TAG DET), wherein:
at least one first antenna (310) and at least one second antenna (312) of the NFC device are successively activated during each first phase and during each second phase; or
only a first antenna (310) of the NFC device is activated during each first phase and only a second antenna (312) of the NFC device, different from the first antenna (310), is activated during each second phase.

2. Circuit for switching an NFC device (1; 500) between first field detection phases (FIELD DET) and second card detection phases (TAG DET), wherein:
at least one first antenna (310) and at least one second antenna (312) of the NFC device are successively activated during each first phase and during each second phase; or
only a first antenna (310) of the NFC device is activated during each first phase and only a second antenna (312) of the NFC device, different from the first antenna (310), is activated during each second phase.

3. NFC device including a circuit (300) according to claim 2 and/or a finite state machine suitable for implementing the method according to claim 1.

4. Computer program product including instructions for implementing the method according to claim 1.

5. Method according to claim 1, or circuit according to claim 2, or device according to claim 3, or program product according to claim 4, wherein the switching is performed periodically.

6. Method according to claim 1 or 5, or circuit according to claim 2 or 5, or device according to claim 3 or 5, or program product according to claim 4 or 5, wherein the switching is performed at a frequency of at least 1 Hz, preferably at a frequency of 3 Hz or of 4 Hz.

7. Method according to claim 1, 5 or 6, or circuit according to claim 2, 5 or 6, or device according to claim 3, 5 or 6, or program product according to any one of claims 4 to 6, wherein a time interval (ΔT) separates the first phase (TAG DET) from the second phase (FIELD DET).

8. Method according to any one of claims 1, 5 to 7, or circuit according to any one of claims 2, 5 to 7, or device according to any one of claims 3, 5 to 7, or program product according to any one of claims 4 to 7, wherein:
one from among the first and second antennas (310, 312) is a contactless recharging antenna of the NFC device (500); and
the other from among the first and second antennas (310, 312) is a shared antenna for implementing GSM and NFC communications.

9. Method according to any one of claims 1, 5 to 8, or circuit according to any one of claims 2, 5 to 8, or device according to any one of claims 3, 5 to 8, or program product according to any one of claims 4 to 8, wherein:
the first antenna (310) is connected to a first adaptation circuit (320); and
the second antenna (312) is connected to a second adaptation circuit (322),
the first and second adaptation circuits being coupled to a multiplexer (330).

10. Method, circuit, device or program product according to claim 9, wherein the multiplexer (330) is controlled by a digital switching signal (CTRL; CTRL').

11. Method, circuit, device or program product according to claim 10, wherein a router (340) of the NFC device (500) supplies the digital switching signal (CTRL; CTRL').

12. Method according to any one of claims 1, 5 to 11, or circuit according to any one of claims 2, 5 to 11, or device according to any one of claims 3, 5 to 11, or program product according to any one of claims 4 to 11, wherein the switching is performed when the NFC device (1; 500) is in low power mode.
